# EUROPEAN PATENT APPLICATION

(11) **EP 4 023 498 A1**
(43) Date of publication of application: **06.07.2022**
(21) Application number: 22382001.0
(22) Date of filing: 01.01.2022
(51) Int. Cl.: B60Q 1/52, B60Q 1/26

(54) **LUMINOUS SIGNALING DEVICE**

(30) Priority: 02.01.2021 ES 202130002 U
(71) Applicant: Serra Bertomeu, Jordi Joan, 28005 Madrid (ES); Salinas Palliso, Josep, 28005 Madrid (ES)
(72) Inventor: Serra Bertomeu, Jordi Joan, 28005 Madrid (ES); Salinas Palliso, Josep, 28005 Madrid (ES)
(74) Representative: García Limorti, Elena

(57) **Abstract**

The invention consists of a luminous signaling device intended to be fixed onto a vehicle, with the aim of improving signaling and informing other drivers in the event of an accident or breakdown, which side the other drivers should follow.

The invention consists of two main bodies, a base (1) and a light panel (2), joined by a shaft (3). The base (1) and the light panel (3) can be opened to form a 180° angle between them, and can remain fixed when they form a 90° angle.

The invention comprises a strap (6), fixed to some handles (7) located on the sides of the base (1) and to be inserted inside the vehicle, fixing the base (1), to the roof of the vehicle. Alternatively it has a magnetic fixing (8) configured to join the base (1) to the roof of the vehicle.

## Description

### OBJECT OF THE INVENTION

The invention, as the title of the present specification establishes, is a luminous signaling device, intended to facilitate the communication of information to drivers traveling in the same direction. It is an innovation that within current techniques provides previously unknown advantages.

More specifically, the luminous signaling device solves the lack of current techniques, because it allows to warn other drivers well in advance of a possible danger.

### TECHNICAL SECTOR

The present invention belongs to the field of vehicle safety, and more specifically to that of vehicle safety accessories.

The present invention refers to a luminous signaling device, capable of warning other drivers of an accident or breakdown.

### BACKGROUND OF THE INVENTION

As a reference to the current state of the art, it should be noted that, although a wide variety of products are known that indicate to drivers the existence of some mishap on the road, at least by the applicant, the existence of any is unknown. that presents structural and constitutive technical characteristics equal or similar to those presented by the one claimed herein.

### EXPLANATION OF THE INVENTION

Therefore, the present invention consists of a luminous signaling device, intended to be incorporated into any automobile, in order to improve signaling and inform drivers traveling on the same road as the automobile in the event of an accident or breakdown, by which side it must be advanced, thereby improving road safety.

The invention is characterized by being composed of two main bodies joined by an axis of rotation, in such a way that the bodies can be closed or open at an angle of up to 180°. One of the bodies consists of a light panel, while the other consists of the base of the device.

By opening the light signaling device and forming an angle of 90° between the two main bodies, it can be placed on the upper part of the vehicle. In this way, the light panel will be vertical and will lightly indicate the stop of the car and the base will be horizontal on the roof of the vehicle.

This panel will indicate on which side it is better to pass the stopped vehicle, by means of indicator lights, which consist of at least one central light and at least one indicator light on each side of the central light that can be made up of several indicator lights, which symbolize an arrow.

Likewise, the luminous signaling device can be fixed to the vehicle by means of a series of straps or straps, or by means of a magnetic system.

Depending on the dimensions or the type of the vehicle, the luminous signaling device can be opened at 180°, and fixed to the front or rear of the vehicle.

En uno de los laterales del dispositivo luminoso de señalización se sitúan una serie de controles, con los que el usuario puede controlar el funcionamiento del dispositivo.

The luminous signaling device can be operated by means of an internal battery or connected to a power source through a socket located on one of the sides of the base.

Likewise, the light indicators can be configured by means of the controls to be seen from one of the driving directions, or from both at the same time.

### BRIEF DESCRIPTION OF THE DRAWINGS

To complete the description that is being made and in order to help better understanding the characteristics of the invention, the present specification is accompanied, as an integral part thereof, by figures in which, for illustrative purposes and non-limiting, the following has been represented:

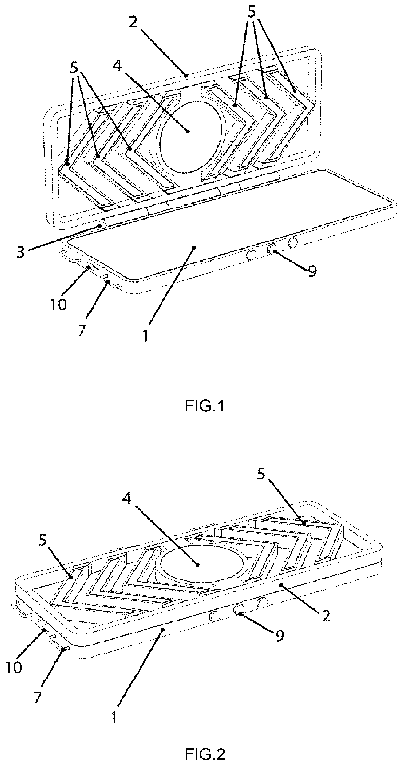

Figure 1 is a perspective representation of the light signaling device open at 90°.
Figure 2 is a perspective representation of the closed signaling light device.

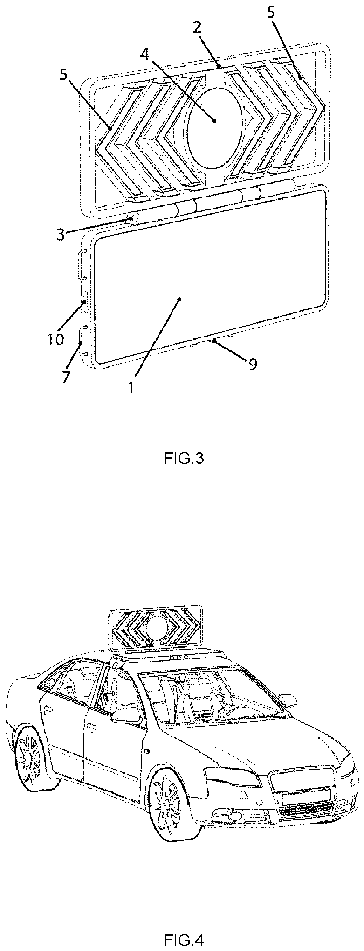

Figure 3 is a perspective representation of the light signaling device open at 180 °.
Figure 4 is a perspective representation of the luminous signaling device placed on a vehicle.

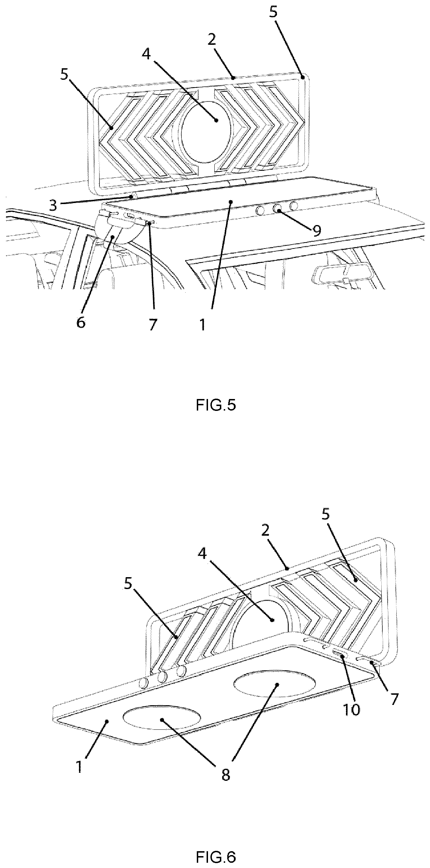

Figure 5 is a detail of the perspective representation of the luminous signaling device placed on a vehicle.
Figure 6 is a perspective representation of the light signaling device seen from its lower part.

### PREFERRED EMBODIMENT OF THE INVENTION

In view of the figures, a preferred, although not limiting, embodiment of the proposed invention is described below, which consists of a luminous signaling device. As can be seen in the figures, the luminous signaling device consists of two main bodies, consisting of a base (1) and a luminous panel (2), joined by a shaft (3). The base (1) and the light panel (3) are configured to be able to open until they form an angle of 180° with each other, being able to remain fixed when they form an angle of 90°.

In the center of the light panel (2), there is at least one central light (4) composed of several light indicators and on each side of the central light (4), there is at least one indicator light (5) that symbolizes an arrow .

At least one strap (6), configured to be fixed on the handles (7) located on the sides of the base (1), and be introduced inside the vehicle, crossing it from side to side to fix the base (1), to the vehicle roof. Likewise, the base (1) also has at least one magnetic attachment (8) configured to join the base (1) to the roof of the vehicle.

On one side of the base (1), a series of controls (9) are located, configured to control and configure the central light (4) and the indicator lights (5), allowing the user to manage how and in what way they are turned on lights.

A power socket (10), located on one of the sides of the base (1), provides the necessary energy to the luminous signaling device, likewise if it could not have an adequate power socket, an internal battery provides the energy necessary.

## Claims

1. Luminous signaling device **characterized by** being fixed to a vehicle and having a base (1), and a luminous panel (2), joined by means of a shaft (3), which are configured to be able to open until they form an angle of 180° to each other, being able to remain fixed when they form an angle of 90°, likewise in the central part of the light panel (2), there is at least one central light (4) composed of several light indicators and on whose sides they are located at the minus one indicator light (5) that symbolizes an arrow, and that has a series of controls (9), configured to control and configure the central light (4) and the indicator lights (5).

2. Luminous signaling device according to claim 1, **characterized in that** the central light (4) and the indicator light (5) can be seen from both directions of direction on a traffic lane.

3. Luminous signaling device according to claim 1, **characterized in that** the central light (4) and the indicator light (5) can be seen from a single direction on a road.

4. Luminous signaling device according to claims 1, 2 and 3, **characterized in that** it has at least one strap (6), configured to be fixed on the handles (7) of the base (1), and be inserted inside the vehicle crossing it from side to side fixing the base (1), to the roof of the vehicle.

5. Luminous signaling device according to claims 1, 2 and 3, **characterized in that** it has at least one magnetic attachment (8) configured to join the base (1) to the roof of the vehicle.

6. Luminous signaling device according to claims 1, 2, 3, 4, and 5, **characterized in that** it has a power outlet (10), configured to provide the necessary energy.

7. Luminous signaling device according to claims 1, 2, 3, 4, 5 and 6, **characterized in that** it has one, an internal battery configured to provide the necessary energy.
